Europäisches Patentamt

European Patent Office

Office européen des brevets

(11) Veröffentlichungsnummer: **0 434 993 A1**

# (12) EUROPÄISCHE PATENTANMELDUNG

(21) Anmeldenummer: 90122576.3

(51) Int. Cl.5: **G01P 3/488**

(22) Anmeldetag: 27.11.90

(30) Priorität: 23.12.89 DE 3942855

(43) Veröffentlichungstag der Anmeldung:
03.07.91 Patentblatt 91/27

(84) Benannte Vertragsstaaten:
DE FR GB IT

(71) Anmelder: **INA Wälzlager Schaeffler KG**
**Industriestrasse 1-3 Postfach 1220**
**W-8522 Herzogenaurach(DE)**

(72) Erfinder: **Seegers, Hanns, Dipl.-Ing.**
**Fasanenweg 70**
**W-8522 Herzogenaurach(DE)**
Erfinder: **Mayer, Ernst, Dr.-Dipl.-Ing.**
**Wiesenstrasse 44**
**W-8521 Grossenseebach(DE)**
Erfinder: **Waldert, Hartwig**
**Am Fürstenberg**
**W-8555 Aisch(DE)**
Erfinder: **Adler, Helmut, Dipl.-Ing.**
**Von-Erthal-Strasse 6**
**W-8522 Herzogenaurach(DE)**

(54) Impulsring für Drehzahlmesseinrichtung.

(57) Die Erfindung betrifft einen Impulsring für eine Drehzahlmeßeinrichtung, der an einem drehenden Bauteil, vorzugsweise einem Wälzlageraußenring angeordnet ist und mit einer Sensoreinheit zusammenwirkt, wobei der Impulsring in Drehrichtung verteilt angeordnete Zählabschnitte aufweist, welche durch Versetzungen eines Grundkörpers in Abtastrichtung der Sensoreinheit gebildet sind.

Ein erfindungsgemäßer Impulsring ist wirtschaftlich herstellbar und weist dennoch eine erhöhte Steifigkeit und Festigkeit auf, so daß bei der Montage des Impulsringes die Gefahr von Verformungen der Zählabschnitte und damit der Meßungenauigkeit der Drehzahlmeßeinrichtung weitgehend vermieden ist.

Fig. 1

## IMPULSRING FÜR DREHZAHLMESSEINRICHTUNG

Die Erfindung betrifft einen Impulsring für eine Drehzahlmeßeinrichtung, der an einem drehenden Bauteil, vorzugsweise einem Wälzlageraußenring angeordnet ist und mit einer Sensoreinheit zusammenwirkt, wobei der Impulsring in Drehrichtung verteilt angeordnete Zählabschnitte aufweist.

Aus der US-PS 47 95 278 ist ein derartiger Impulsring bekannt, bei dem zwei in axialem Abstand angeordnete Ringe durch axiale Stege verbunden sind, welche durch die Sensoreinheit abtastbare Zählabschnitte bilden. Für die Funktion eines Impulsringes ist diese Ausführung durchaus geeignet, sie erweist sich jedoch hinsichtlich der Montage und der Widerstandsfähigkeit gegen die Umgebungseinflüsse, die z. B. beim Einsatz an einem Radlager eines Kfz herrschen, als nicht ausreichend. Die Genauigkeit der Drehzahlmessung hängt ab von der Anzahl der durch die Stege pro Umdrehung abgebbaren Impulse, weshalb die Stege in der Regel sehr dünn ausgeführt und in dichtem Abstand in Umfangsrichtung angeordnet sind. Beim Aufpressen des Impulsringes auf den Lageraußenring reicht die Steifigkeit der Stege in axialer Richtung in der Regel nicht aus, so daß bereits bei der Montage Verformungen auftreten, die die Meßgenauigkeit der Drehzahlmeßeinrichtung erheblich negativ beeinflußen. Andererseits ist auch die Herstellung derartiger Ringe mit wirtschaftlichen Nachteilen verbunden, da der Ring selbst durch Tiefziehen geformt und die Räume zwischen den Stegen durch Ausstanzen gebildet sind. Der damit verbundene Materialabfall ist unwirtschaftlich. Ein anderes Verfahren, bei dem der Ring aus einem Band gebildet wird, in dem die Taschen zwischen den Stegen ausgestanzt sind und das anschließend gewickelt und an den Enden verschweißt wird, bringt den Nachteil mit sich, daß lediglich die Enden der Stirnringe verschweißt werden,mit der Folge, daß die sehr kurze Schweißnaht leicht aufreißen kann.

Eine andere Drehzahlmeßeinrichtung nutzt für die Impulsgebung ein in der Regel an der Einbaustelle ohnehin vorhandes Zahnrad. Ist im Einbaufall ein solches Zahnrad jedoch nicht vorhanden, erscheint dessen Anfertigung und Einsatz ausschließlich als Impulsring unwirtschaftlich.

Die Aufgabe der Erfindung ist es, einen Impulsring für Drehzahlmeßeinrichtungen zu schaffen, der wirtschaftlich herstellbar ist und eine erhöhte Steifigkeit und Festigkeit aufweist.

Die Aufgabe wird dadurch gelöst, daß der Impulsring aus einem Grundkörper besteht, an dem die Zählabschnitte durch Versetzungen des Grundkörpers um einen Teilbetrag der Wanddicke des Grundkörpers (Anstanzen) in Abtastrichtung der Sensoreinheit gebildet sind.

Ein erfindungsgemäßer Impulsring besteht aus einem geschlossenen Grundkörper, an dem keinerlei die Steifigkeit reduzierenden Aussparungen vorgesehen sind. Die Zählabschnitte sind durch Versetzungen im Material des Grundkörpers gebildet, die sogar im Sinne versteifender Sicken wirken. Bevorzugt wird der Impulsring zylindrisch ausgeführt und zusammen mit einer in radialer Richtung abtastenden Sensoreinheit eingesetzt. In diesem Anwendungsfall ist der Impulsring in der Regel auf dem Außenumfang eines rotierenden Bauteils, insbesondere einem Wälzlageraußenring, aufgepreßt.

In einer ersten Variante sind die Zählabschnitte durch im wesentlichen quaderförmige Versetzungen um einen Teilbetrag der Wanddicke des Grundkörpers des Impulsringes gebildet.

In einer weiteren Ausgestaltung der Erfindung ist vorgesehen, daß die Zählabschnitte eine in Umfangsrichtung ansteigende Kontur, insbesondere eine Sägezahnkontur aufweisen, wobei die Zählabschnitte durch in Umfangsrichtung laschenförmige Anstanzungen gebildet sind. Damit ist die Möglichkeit gegeben, unterschiedliche Drehrichtungen des Impulsringes durch die Sensoreinheit zu erfassen, weil je nach Drehrichtung durch derartige Zählabschnitte verschiedene Impulse erzeugt werden.

Eine besonders wirtschaftliche Methode zur Herstellung erfindungsgemäßer Impulsringe besteht darin, zunächst an einem Band die Zählabschnitte anzuformen, anschließend das Band rundzubiegen und an den Endstellen zu verschweißen, wobei die Schweißnaht über die gesamte axiale Länge des Grundkörpers verläuft und folglich die Gefahr des Aufreißens weitgehend vermieden ist. Überlicherweise wird ein ferromagnetisches Material verwendet, welches durch galvanische Schichten oder durch Lackierung bzw. Umspritzen mit organischem Material korrossionsgeschützt sein kann.

Die Erfindung wird im folgenden anhand einiger Ausführungsbeispiele erläutert. Es zeigen:

Fig. 1   eine Radlagerung mit erfindungsgemäßem Impulsring,

Fig. 2 und 3   einen Quer- und Längsschnitt eines Impulsringes mit quaderförmigen Versetzungen und

Fig. 4 und 5   einen Quer- und Längsschnitt eines Impulsringes mit laschenförmigen Versetzungen.

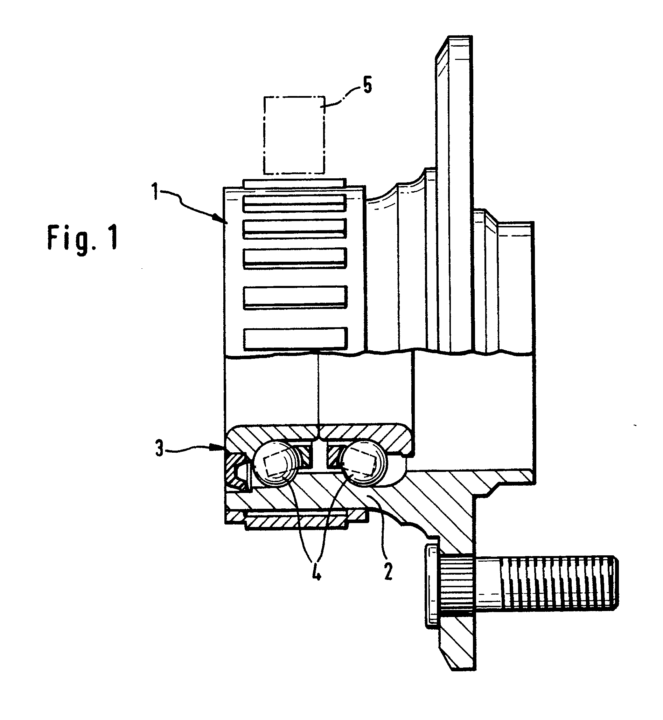

In Figur 1 ist ein Impulsring 1 in seiner Einbausituation gezeigt. Der Impulsring 1 ist auf dem Außenring 2 einer Radlagerung 3 aufgepreßt, welche aus zwei Schrägkugellagern 4 besteht. Der Impulsring 1 wirkt mit einer schematisch dargestellten Sensoreinheit 5 zusammen, die in radialer Richtung den Impulsring 1 abtastet. Impulsring 1 und Sensoreinheit 5 bilden zusammen mit einem nicht dargestellten Auswertungsinstrument eine Drehzahlmeßeinrichtung.

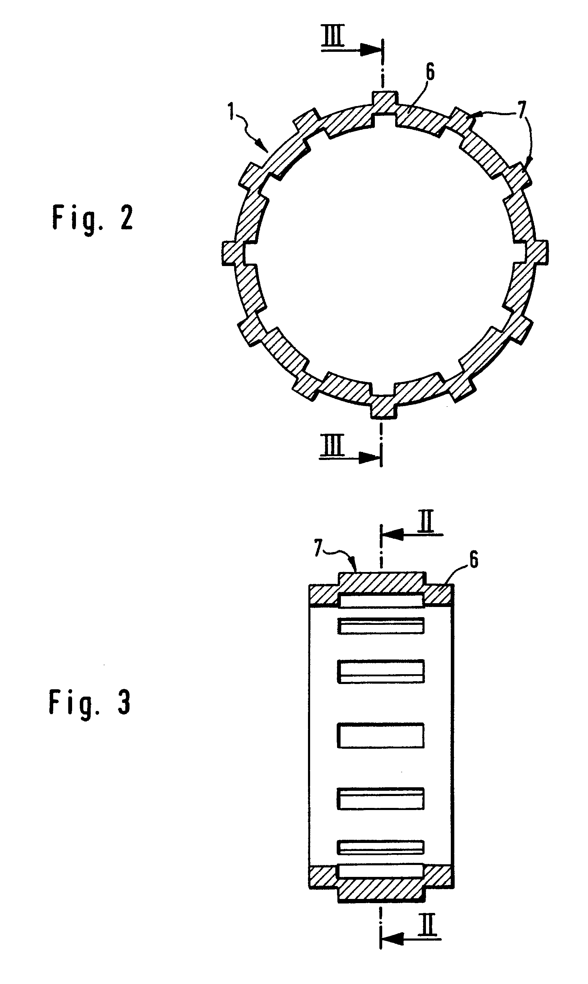

Figur 2 zeigt den Querschnitt eines Impulsringes 1, der aus einem zylindrischen Grundkörper 6 besteht, an dem die Zählabschnitte 7 durch radiale Versetzungen des Grundkörpers 6 gebildet sind. Wie in Figur 3 zu erkennen ist, bestehen die Zählabschnitte 7 aus im wesentlichen quaderförmigen, um einen Teilbetrag der Wanddicke des Grundkörpers 6 versetzten Abschnitten, welche durch das sogenannte "Anstanzen" erzeugt sind. Der Impulsring 1 ist als geschlossener Körper ausgeführt, der keine die Steifigkeit vermindernden Ausnehmungen aufweist, so daß dieser ohne die Gefahr einer Verformung und der damit verbundenen Meßungenauigkeit auf den Außenring 2 des Lagers aufgepreßt werden kann. Der Impulsring 1 wird in vorteilhafter Weise dadurch erzeugt, daß die Zählabschnitte 7 zunächst an einem flachen Band angestanzt werden, welches dann abgelängt, rundgebogen und an den Enden verschweißt wird.

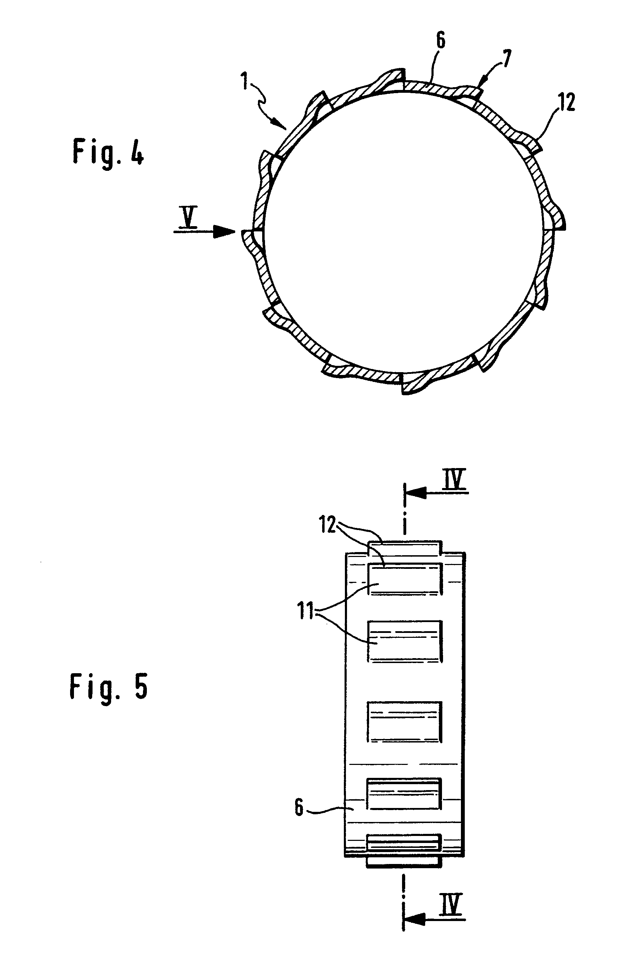

Die Figuren 4 und 5 zeigen einen Impulsring 1, der am Umfang angeordnete U-förmige, angestanzte Laschen 11 aufweist, die in ihren Endabschnitten 12 radial aufgestellt sind, so daß diese Endabschnitte 12 von der Sensoreinheit erfaßbar sind. Hierbei weisen die Zählabschnitte 7 eine in Umfangsrichtung ansteigende Kontur auf, was den Vorteil bringt, daß von den Zählabschnitten 7 bei unterschiedlicher Drehrichtung des Impulsringes 1 verschiedenartige Impulse erzeugt werden, so daß durch die Sensoreinheit nicht nur die Drehzahl, sondern auch die jeweilige Drehrichtung erfaßt werden kann.

Neben den dargestellten Ausführungsvarianten sind weitere konstruktive Möglichkeiten vorhanden, die ebenfalls unter die beanspruchte Erfindung fallen, an dieser Stelle jedoch nicht näher erläutert sind. Hingewiesen sei lediglich auf Bauarten, bei denen der Grundkörper scheibenartig ausgeführt ist und die Zählabschnitte durch axiale Versetzungen gebildet sind.

**Ansprüche**

1. Impulsring für Drehzahlmeßeinrichtung, der an einem drehenden Bauteil, vorzugsweise einem Wälzlageraußenring (2) angeordnet ist und mit einer Sensoreinheit (5) zusammenwirkt, wobei der Impulsring (1) in Drehrichtung verteilt angeordnete Zählabschnitte (7) aufweist, **dadurch gekennzeichnet,** daß der Impulsring (1) aus einem Grundkörper (6) besteht, an dem die Zählabschnitte (7) durch Versetzungen des Grundkörpers (6) um einen Teilbetrag der Wanddicke des Grundkörpers (Anstanzen) in Abtastrichtung der Sensoreinheit (5) gebildet sind.

2. Impulsring nach Anspruch 1, **dadurch gekennzeichnet,** daß der Grundkörper (6) zylindrisch ist und die Zählabschnitte (7) durch radiale Versetzungen gebildet sind.

3. Impulsring nach Anspruch 2, **dadurch gekennzeichnet,** daß die Zählabschnitte (7) durch im wesentlichen quaderförmige Versetzungen des Grundkörpers (6) um einen Teilbetrag der Wanddicke (Anstanzen) des Grundkörpers (6) gebildet sind.

4. Impulsring nach Anspruch 2, **dadurch gekennzeichnet,** daß die Zählabschnitte (7) eine in Umfangsrichtung ansteigende Kontur, insbesondere eine Sägezahnkontur aufweisen und durch in Umfangsrichtung laschenförmige Versetzungen gebildet sind.

5. Impulsring nach einem der Ansprüche 2 bis 4, **dadurch gekennzeichnet,** daß der Impulsring (1) aus flachem Band gerollt und an den Enden insbesondere durch Schweißen verbunden ist.

6. Impulsring nach einem der Ansprüche 2 bis 5, **dadurch gekennzeichnet,** daß der Impulsring (1) aus ferromagnetischem Blech besteht.

7. Impulsring nach einem der Ansprüche 2 bis 6, **dadurch gekennzeichnet,** daß der Impulsring (1) mit einer Korrossionsschutzschicht versehen ist.

Fig. 1

Fig. 2

Fig. 3

Fig. 4

Fig. 5

Europäisches
Patentamt

**EUROPÄISCHER
RECHERCHENBERICHT**

Nummer der Anmeldung

**EP 90 12 2576**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 703 395   (PORSCHE)<br>* Spalte 1, Zeile 45 - Spalte 3, Zeile 14; Figuren 1-3 *<br>– – – | 1-3 | G 01<br>P 3/488 |
| Y | | 4-7 | |
| Y | GB-A-9 530 36   (PHILIPS)<br>* Seite 1, Zeilen 57-78; Figuren 1-3 *<br>– – – | 4 | |
| Y | DE-A-2 431 962   (ALFRED TEVES)<br>* Seite 5, Zeile 14 - Seite 6, Zeile 26; Figur 2 *<br>– – – | 5 | |
| Y | DE-A-2 403 854   (ALFRED TEVES)<br>* Seite 4, Zeile 27 - Seite 5, Zeile 13; Figur 2 *<br>– – – | 6 | |
| Y,D | US-A-4 795 278   (HAYASHI)<br>* Spalte 5, Zeile 56 - Spalte 6, Zeile 42; Spalte 7, Zeilen 1-21; Figuren 10-12,14-15 *<br>– – – – – | 7 | |

**RECHERCHIERTE SACHGEBIETE (Int. Cl.5)**

G 01 P

Der vorliegende Recherchenbericht wurde für alle Patentansprüche erstellt

| Recherchenort | Abschlußdatum der Recherche | Prüfer |
|---|---|---|
| Den Haag | 09 Januar 91 | ROBINSON M.A. |